Europäisches Patentamt

**European Patent Office**

**Office européen des brevets**

(11) Veröffentlichungsnummer: **0 010 730**
**A1**

(12) **EUROPÄISCHE PATENTANMELDUNG**

(21) Anmeldenummer: **79104124.7**

(51) Int. Cl.³: **B 60 P 3/025**

(22) Anmeldetag: **24.10.79**

(30) Priorität: **24.10.78 DE 2846272**

(71) Anmelder: **Spasojevic, Ratko, Sandbergerstrasse 36, D-7000 Stuttgart 1 (DE)**

(43) Veröffentlichungstag der Anmeldung: **14.05.80**
**Patentblatt 80/10**

(72) Erfinder: **Spasojevic, Ratko, Sandbergerstrasse 36, D-7000 Stuttgart 1 (DE)**

(74) Vertreter: **Menges, Rolf et al, PATENTANWÄLTE MENGES & PRAHL Erhardtstrasse 12, D-8000 München 5 (DE)**

(84) Benannte Vertragsstaaten: **AT BE CH FR GB IT LU NL SE**

(54) **Fahrbarer Verkaufsstand.**

(57) Bei diesem Verkaufsstand (101) sind eine Verkaufsöffnung (104) wenigstens einer Längsseite und ein Fahrgestellboden (107) vorgesehen.

Damit der Verkaufsstand (101) Platz- und Wetterverhältnissen besser angepaßt werden kann, sind wenigstens ein Rolladen (116) zum Verschließen wenigstens der Verkaufsöffnung (104) und wenigstens ein innerhalb des Verkaufsstandes verschiebbar gelagertes und zum Verbreitern des Verkaufsstandes auf einer gesamten Längsseite desselben herausziehbares Führungsgestell (117) für den Rolladen (116) vorgesehen.

PATENTANWÄLTE
MENGES & PRAHL

Erhardtstrasse 12, D-8000 München 5

Unser Zeichen                     S 202-EP

Ratko Spasojevic
Sandbergerstr. 36
7000 Stuttgart 1

Fahrbarer Verkaufsstand

Die Erfindung betrifft einen fahrbaren Verkaufsstand der im Oberbegriff des Anspruchs 1 angegebenen Art.

Es ist bereits ein Verkaufsstand dieser Art bekannt (DE-AS 1 095 136), welcher mit mehreren hochschwenkbaren und in hochgeschwenkter Stellung als Schutzdach dienenden Verschlußklappen vor den Verkaufsöffnungen versehen ist. Es ist dabei eine komplizierte Vorrichtung zum Hochschwenken und Abschwenken der Verschlußklappen erforderlich. Weiter schützen diese Verschlußklappen in hochgeschwenkter Stellung Kunden nur gegen Sonneneinstrahlung und Regen von oben, nicht aber gegen Regen bei boeigem Wetter.

Weiter ist ein fahrbarer Verkaufsstand dieser Art bekannt (DE-GM 75 09 438.1), bei welchem zusätzlich zu den hochschwenkbaren Verschlußklappen herunterklappbare Fußpodeste vorgesehen sind, der aber bei boeigem Wetter Kunden ebenfalls nicht vor Regen schützen kann.  Bei diesem bekannten
Verkaufsstand ist zwar eine allseitige Bedienung möglich,
er hat jedoch insgesamt einen sperrigen Aufbau, der seinen
Einsatz unter beengten Platzverhältnissen beschränkt.

Aufgabe der Erfindung ist es, solche bekannten fahrbaren
Verkaufsstände so zu verbessern, daß sie auch unter beengten
Platzverhältnissen ohne weiteres benutzt und transportiert
werden können und daß ihr Schließen und Öffnen zu Bedienungszwecken wesentlich einfacher ist.

Diese Aufgabe wird durch die im Kennzeichen des Anspruchs 1
angegebenen Merkmale gelöst.

Bei dem Verkaufsstand nach der Erfindung wird anstelle der
sperrigen Verschlußklappen ein wesentlich einfacher bedienbarer Rolladen benutzt. Bei Nichtgebrauch und zum Transport
läßt sich der Verkaufsstand durch Einschieben des Führungsgestells wesentlich verkleinern, so daß er auch in Kaufhäusern
durch enge Gänge geschoben werden kann und bei Nichtgebrauch
nur eine geringe Standfläche beansprucht.

Zweckmäßige Ausgestaltungen der Erfindung bilden den Gegenstand der Unteransprüche.

In der Ausgestaltung nach Anspruch 8 läßt sich die Länge des
Verkaufsstandes beliebig den Betriebserfordernissen anpassen,
indem einfach gleiche Verkaufsstände in entsprechender Anzahl
aneinandergereiht werden.

In der Ausgestaltung nach Anspruch 13 läßt sich von dem Verkaufsstand aus auch auf der Längsseite bedienen, auf der das
Führungsgestell herausgezogen wird. Der Rolladen dient dabei gleichzeitig als Dach über einem herunterklappbaren Kundenpodest. Beim Einschieben des Führungsgestells rollt sich der
Rolladen in Rolladenkästen auf.

In der Ausgestaltung nach Anspruch 14 läßt sich beispielsweise
nur eine Hälfte des Verkaufsstandes öffnen, während die andere
Hälfte durch den heruntergezogenen Rolladen geschlossen halten
läßt, so daß sich ein geschlossener und vor Witterungseinflüssen
geschützter Innenraum vor der Verkaufsöffnung ergibt.

In der Ausgestaltung nach den Ansprüchen 10 und 16 sind hinter
jeder Verkaufsöffnung zweckentsprechende Thekeneinbauten vorgesehen, die es ermöglichen, mit geringstem Personalaufwand
den Verkaufsstand als Imbisstand zu betreiben, in welchem
Speisen und Getränke zubereitet werden können.

In der Ausgestaltung nach Anspruch 21 ist das Führungsgestell
an beiden Stirnseiten verglast (statt der Verglasung können
auch Klapptüren vorgesehen werden), so daß Kunden, die sich
vor der Verkaufsöffnung befinden, auch bei widrigsten Witterungsbedingungen geschützt sind.

In der Ausgestaltung nach Anspruch 22 braucht nach Betriebsschluß nicht das Fußpodest hochgeklappt zu werden, es genügt,
den Rolladen ganz herunterzuziehen, um den Verkaufsstand zu
schließen. Seine Handhabung wird dadurch gegenüber den bekannten Verkaufsständen wesentlich erleichtert.

In der Ausgestaltung nach Anspruch 23 ist der Verkaufsstand
so ausgebildet, daß eine Bedienung auf beiden Längsseiten
ohne weiteres möglich ist.

Mehrere Ausführungsbeispiele des fahrbaren Verkaufsstandes
nach der Erfindung werden im folgenden unter Bezugnahme
auf die beigefügten Zeichnungen näher beschrieben. Es zeigen:

Fig. 1              eine Seitenansicht einer ersten Aus-
                    führungsform des fahrbaren Verkaufs-
                    standes im Bedienungszustand,

Fig. 2              den Verkaufsstand von Fig. 1 in Vorderansicht,

Fig. 3              einen Schnitt durch den Verkaufsstand
                    auf der Linie III-III von Fig. 2,

Fig. 4              einen Schnitt durch den Verkaufsstand
                    auf der Linie IV-IV von Fig. 3,

Fig. 5              in einer ähnlichen Schnittansicht wie
                    in Fig. 4 den Verkaufsstand in geschlossenem Zustand,

die Fig. 6a bis 6c  verschiedene Kombinationsmöglichkeiten
                    des Verkaufsstandes,

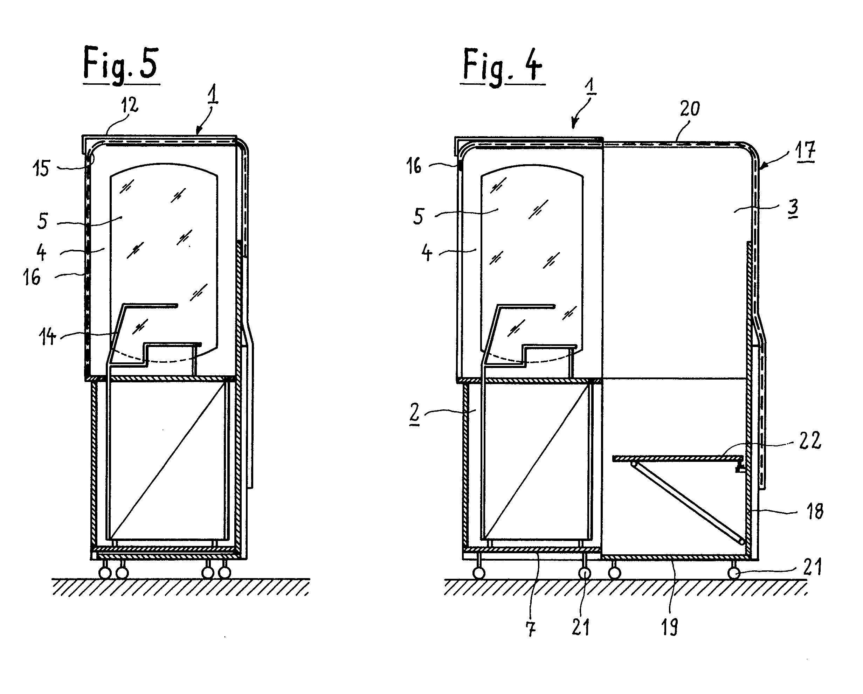

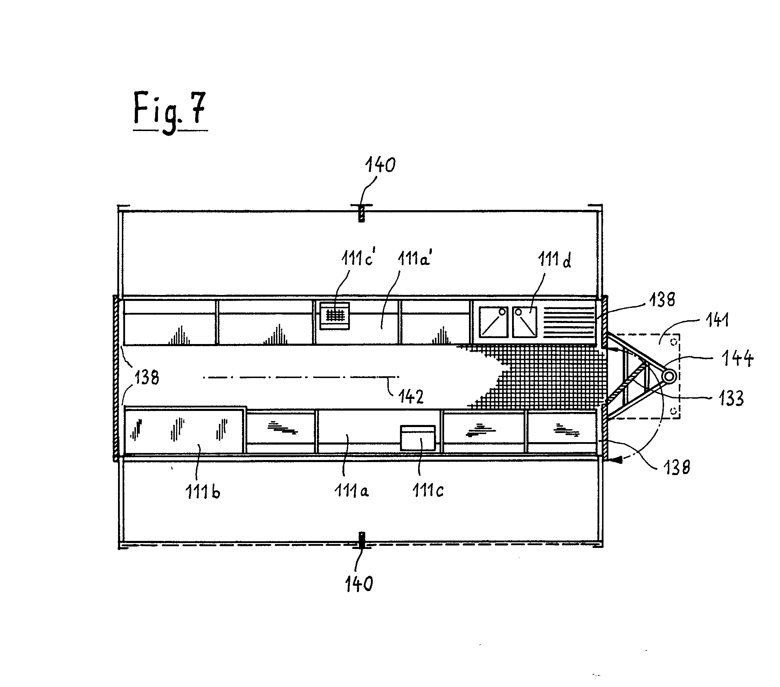

Fig. 7              einen Schnitt durch eine weitere Ausführungsform des Verkaufsstandes nach
                    der Erfindung auf der Linie VII-VII von
                    Fig. 8,

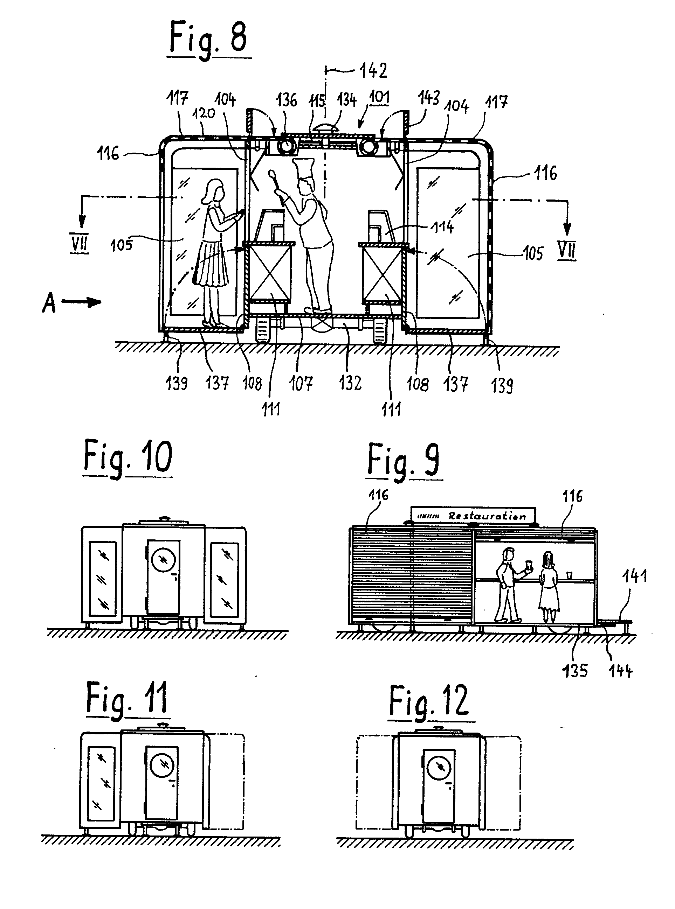

Fig. 8              eine Querschnittansicht des Verkaufsstandes von Fig. 7,

Fig. 9              eine Ansicht des Verkaufsstandes in
                    Richtung des Pfeils A in Fig. 8, und

die Fig. 10 bis 12      die zweite Ausführungsform des Verkaufsstandes in beidseitig geöffnetem
                        bzw. einseitig geöffnetem bzw. beidseitig geschlossenem Zustand.

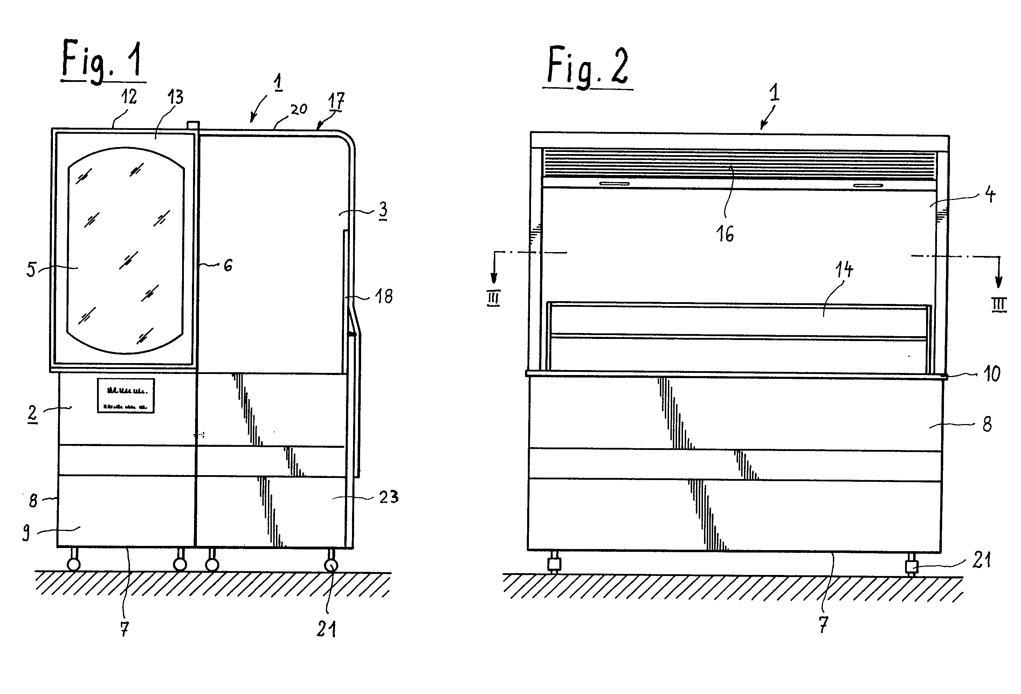

Die Fig. 1 bis 6 zeigen eine erste Ausführungsform eines
in seiner Gesamtheit mit 1 bezeichneten fahrbaren Verkaufsstandes. Der Verkaufsstand 1 besteht aus zwei teleskopisch
ineinander schiebbaren Gehäuseteilen 2 und 3, die in den
Fig. 1 und 4 im ausgefahrenen Zustand (Bedienungszustand)
dargestellt sind, während sie in Fig. 5 im eingefahrenen
Zustand (Zustand bei Nacht oder Transportzustand) dargestellt
sind.

Der Gehäuseteil 1 bildet ein kastenförmiges, im Horizontalschnitt rechteckiges Gehäuse, das auf der Vorderseite mit
einer Verkaufsöffnung 4 und an den beiden Stirnseiten mit
Verglasungen 5 aus braun getöntem Sicherheitsglas versehen
ist, während es an seiner Rückseite 6 offen ist. Der Gehäuseteil 2 weist einen stabilen Fahrgestellboden 7, eine Frontplatte 8 und Seitenwände 9 auf, die aus wetterfesten, kunststoffbeschichteten Spanplatten bestehen und nach oben in
Richtung zur Verkaufsöffnung bis zu einer Ablage 10 aus dem
gleichen Material reichen. Der Gehäuseteil 2 enthält in diesem
vorstehend beschriebenen Bereich Thekeneinbauten 11, wie Kühl-,
Heiz- und/oder Grillgeräte. Stattdessen kann er aber auch Regale für fertigverpackte Waren enthalten, die zu verkaufen
sind.

Der Bereich des Gehäuseteils 2 oberhalb der Ablage 10 besteht
aus einem stabilen Metallrahmen, der diesen Bereich an allen
Kanten umschließt und an den Stirnseiten des Verkaufsstandes
mit Einfassungen 13 für die Verglasungen 5 versehen ist. Die
Einfassungen sind ebenfalls wetterfeste, kunststoffbeschichtete
Spanplatten mit entsprechenden Ausschnitten für die Sicherheitsglasscheiben. Oberhalb der Ablage 10 und der Thekeneinbauten 11 ist schließlich noch eine bei derartigen Verkaufsständen übliche Glasvitrine 14 angeordnet.

An den inneren Stirnseiten des Verkaufsstandes 1 sind über die gesamte Höhe des Verkaufsöffnung und über die gesamte Tiefe des Gehäuseteils 2 U-Schienen 15 zur Führung eines Rolladens 16 fest angebracht. Fig. 4 zeigt den Bedienungszustand des Verkaufsstandes, in welchem der Rolladen 16 hochgeschoben ist, während Fig. 5 den Verkaufsstand in geschlossenem Zustand zeigt, in welchem der Rolladen 16 heruntergezogen ist.

Der andere Gehäuseteil 3 besteht im wesentlichen aus einem Führungsgestell 17 für den Rolladen 16, einer damit fest verbundenen Rückwand 18 aus wetterfester, kunststoffbeschichteter Spanplatte und einem das Führungsgestell 17 vervollständigenden Boden 19. Das Führungsgestell 17 weist an den Stirnseiten des Verkaufsstandes U-Schienen 20 auf, die im Dachbereich des Verkaufsstandes in den U-Schienen 16 teleskopisch horizontal verschiebbar sind und sich vom Dachbereich aus an der Rückseite des Verkaufsstandes vertikal so weit nach unten erstrecken, daß bei geöffnetem Verkaufsstand der Rolladen 16 so weit nach oben geschoben werden kann, daß er die Verkaufsöffnung 4 vollständig freigibt (vgl. die Darstellung in Fig. 4). Bei geschlossenem Verkaufsstand (Fig. 5) verschließt der Rollladen 16 sowohl die Verkaufsöffnung 4 als auch den Bereich oberhalb der Rückwand 18.

Der Boden 19 ist etwas tiefer angeordnet als der Fahrgestellboden 7, so daß er sich beim Schließen des Verkaufsstandes unter den Fahrgestellboden 7 bewegt und schließlich die in Fig. 5 dargestellte Stellung einnimmt. In dieser Stellung ist der Verkaufsstand allseitig fest verschlossen und benötigt nur eine geringe Standfläche. Außerdem kann er in diesem Zustand leicht durch enge Gänge transportiert werden, beispielsweise in Stadien und Kaufhäusern.

Sowohl der Fahrgestellboden 7 als auch der Boden 19 des Gehäuseteils 3 tragen an der Unterseite jeweils vier kugelgelagerte und gummibereifte Rollen 21 (sog. Kugelrollen). Der Verkaufsstand kann dank dieser Rollen spielend leicht verfahren werden.

In dem Gehäuseteil 3 ist an der Rückwand 18 eine Klappsitzbank 22 angelenkt, die vor dem Zusammenschieben der Gehäuseteile 2 und 3 an der Rückwand 18 hochgeklappt wird.

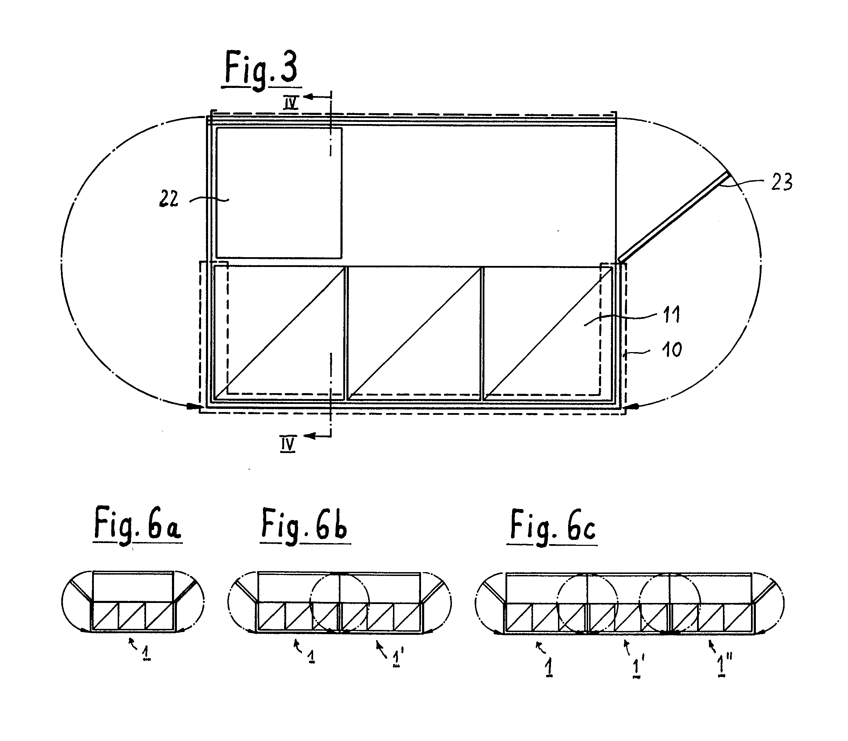

An wenigstens einer Stirnseite des Verkaufsstandes 1 ist eine um 180° schwenkbare Klapptür 23 angelenkt (Fig. 3), die sich im Bedienungszustand des Verkaufsstandes vor der Zugangsöffnung desselben befindet (Fig. 1) und vor dem Schließen des Verkaufsstandes gegen die Seitenwand 9 geklappt wird, wie es in Fig. 3 rechts durch den Pfeil dargestellt ist. Eine gleiche Klapptür ist entsprechend an der gemäß Fig. 3 linken Stirnseite des Verkaufsstandes vorgesehen.

Der Verkaufsstand 1 ist an seinen Stirnseiten ohne vorstehende Teile ausgebildet, so daß er beliebig mit weiteren gleichen Verkaufsständen 1' (Fig. 6b) und 1'' (Fig. 6c) kombiniert werden kann. Vor dem Aneinanderstellen der Verkaufsstände werden die Klapptüren 23 gegen die Seitenwände 9 geklappt, was aus den Fig. 6b und 6c ohne weiteres ersichtlich ist. In der Praxis hat der in Fig. 6a dargestellte Verkaufsstand beispielsweise eine Länge von 2 m, und damit die in Fig. 6c dargestellte Kombination eine Gesamtlänge von 6 m. Die einzelnen Verkaufsstände können in der Anordnung von Fig. 6b und Fig. 6c im Bereich der Seitenwände 9 und an den darüber befindlichen Stirnseiten des Rahmens 12 durch nicht dargestellte lösbare Kupplungsvorrichtungen miteinander verbunden werden, so daß sie auch nachts miteinander verbunden bleiben können. Es sind dann lediglich die Führungsgestelle 17 in jeden zugeordneten Verkaufsstand einzuschieben und die einzelnen Rolläden 16 zu schließen und abzuschließen.

Der Verkaufsstand 1 ist mit einem 220/380-V-Netzanschluß für die in ihm installierten Geräte versehen und kann deshalb an jede entsprechende Steckdose angeschlossen werden. Er kann damit ohne weiteres in Sporthallen, auf Messen- und Festplätzen und als Einzelverkaufsstand innerhalb von Kaufhäusern und Großraumläden sowie bei Veranstaltungen im Freien benutzt werden. Durch Verwendung der entsprechenden Thekeneinbauten ist er an alle Verwendungszwecke (Imbissausgabe, Verkauf von warmen und kalten Getränken, Herstellung und/oder Verkauf von Speiseeis, Verkauf von fertigverpackten Waren, usw.) anpaßbar.

Die Fig. 7 bis 12 zeigen eine weitere Ausführungsform des fahrbaren Verkaufsstandes nach der Erfindung.

Die zweite Ausführungsform des fahrbaren Verkaufsstandes ist geräumiger und in der Praxis größer ausgebildet als die erste Ausführungsform und findet insbesondere im Freien Verwendung.

Der hier in seiner Gesamtheit mit 101 bezeichnete Verkaufsstand besteht aus einem einteiligen (im Gegensatz zu dem Verkaufsstand 1) Gehäuse und ist in seinem Grundaufbau wie ein zweiachsiger Campinganhänger mit einem Fahrgestell 32 und einer stirnseitigen Zugangstür 33 sowie einer dachseitigen Belüftungsvorrichtung 34 ausgebildet. Auf beiden Längsseiten ist der Verkaufsstand 101 jeweils mit einer Verkaufsöffnung 104 versehen. Innerhalb des Verkaufsstandes sind auf einem Fahrgestellboden 107 Thekeneinbauten 111 vorgesehen, bei

- 9 -

0010730

denen es sich um die gleichen Einbauten wie bei der zuerst beschriebenen Ausführungsform handeln kann. Hinter der Verkaufsöffnung sind oberhalb der Thekeneinbauten Glasvitrinen 114 vorgesehen.

Im Dachbereich des Verkaufsstandes 101 sind U-Schienen 115 fest angebracht. Der Verkaufsstand 101 ist auf beiden Längsseiten mit Führungsgestellen 117 aus U-Schienen 120 und diese fest miteinander verbindenden Querträgern 135 versehen. Die beiden Führungsgestelle 117 sind in der dargestellten Ausführungsform an beiden Stirnseiten jeweils mit Verglasungen 105 versehen, die mit den Führungsgestellen fest verbunden sind. Die U-Schienen 115 erstrecken sich in der Verlängerung des Dachbereiches des Verkaufsstandes 101 horizontal, biegen dann nach unten ab und erstrecken sich über die gesamte Höhe des Verkaufsstandes vertikal. Im Dachbereich sind in Längsrichtung des Verkaufsstandes 101 zwei Rolladenkästen 136 vorgesehen, die jeweils eine Achse (oder eine Welle mit Handkurbelantrieb) zum Aufrollen des zugeordneten Rolladens 116 aufweisen.

An dem Verkaufsstand ist an jeder Längsseite unten ein hochklappbares Fußpodest 137 angelenkt. Diese Fußpodeste können um 90° hochgeklappt werden, so daß sie an den Längswänden 108 des Verkaufsstandes zu liegen kommen.

Wenn der zunächst geschlossene Verkaufsstand, wie er in Fig. 12 dargestellt ist, in den Bedienungszustand versetzt werden soll, werden die beiden Führungsgestelle 117 auf beiden Längsseiten bis in die in Fig. 8 dargestellte Stellung aus dem Inneren des Verkaufswagens herausgezogen. Die verglasten Stirnseiten der Führungsgestelle 117 gleiten dabei aus entsprechenden Ausnehmungen 138 heraus, während die U-Schienen 120 der Führungsgestelle aus den festen U-Schienen 115, in denen sie teleskopisch geführt sind, herausgleiten. Vor dem Herausziehen der Führungsgestelle 117 werden die Rolladen 116 zweckmäßig hochgeschoben, d.h. in den Rolladenkästen 136 aufgerollt. Nach dem Herausziehen der Führungsgestelle 117 werden die Fußpodeste 137 heruntergeklappt, wobei gleichzeitig Füße 139 nach unten klappen und die Fußpodeste auf dem Erdboden abstützen.

Die Rolladen 116 sind jeweils mittig unterteilt, so daß bei Bedarf oder bei schlechten Witterungsbedingungen nur eine Hälfte des Verkaufsstandes geöffnet zu werden braucht, wie es in Fig. 9 dargestellt ist. An ihren einander benachbarten Enden sind die beiden Rolladen 116 auf jeder Längsseite des Verkaufsstandes 101 in einer doppelseitigen U-Schiene 140 geführt, die unten ebenfalls mit dem Querträger 135 fest verbunden ist und oben im Dachbereich eine entsprechende teleskopische Führung hat (nicht dargestellt).

Oberhalb jeder Verkaufsöffnung 104 ist im Dach des Verkaufsstandes 101 eine hochschwenkbare Klappe 143 eingelassen, die mit einer Firmen- oder Reklamebeschriftung versehen ist und im Bedienungszustand (Fig. 8) senkrecht hochgeschwenkt ist, während sie nachts oder im Transportzustand des Verkaufsstandes heruntergeklappt ist.

Die mit den Verglasungen 105 versehenen Stirnwände des Führungsgestells können statt der Verglasungen auch mit Klapptüren versehen sein, so daß auch bei herausgezogenen Führungsgestellen 117 und heruntergelassenen Rolläden 116 (z.B. bei schlechten Witterungsbedingungen oder starker Kälte) der Raum vor den Verkaufsöffnungen 104 für Kunden zugänglich ist.

Der Verkaufsstand 101 ist auf der mit der Zugangstür 133 versehenen Seite mit einer Anhängerkupplung 144 versehen, auf die ein Eingangssockel 141 aufgelegt wird, der den Zugang ins Innere des Verkaufsstandes für das Personal erleichtert.

Der Verkaufsstand 101 ist, wie die Fig. 7 und 8 ohne weiteres zeigen, bezüglich seiner vertikalen Längsmittelebene spiegelbildlich gleich ausgebildet (abgesehen von den Thekeneinbauten 111). Das ermöglicht einen Verkauf auf beiden Längsseiten, von denen die eine beispielsweise die Straßenseite und die andere die Gartenseite des Verkaufsstandes bildet. Bei der hier dargestellten Ausführungsform bestehen die Thekeneinbauten 111 aus einer Warm-Heiß-Theke 111a mit einem Hähnchengrill 111b sowie einer Kasse 111c auf der einen Längsseite und aus einer Kalt-Theke 111a' mit einer Spüle 111d und einer Kasse 111c' auf der anderen Längsseite. Der Fahrgestellboden 107 ist auf der Innenseite gefliest.

Das Fahrgestell 132 ist in herkömmlicher Weise mit vier luftbereiften Rädern versehen. Der eigentliche Verkaufsstand 101 hat eine Leichtmetallkonstruktion. Die Lamellen der Rolläden bestehen ebenfalls aus Leichtmetall. Ebenso bestehen die Führungsgestelle aus Leichtmetall. Der Verkaufsstand 101 ist, ebenso wie die zuerst beschriebene Ausführungsform, mit einem 220/380-V-Netzanschlußkabel versehen, so daß er an jede geeignete Steckdose angeschlossen werden kann.

Die Fig. 10 bis 12 zeigen verschiedene Zustände des Verkaufsstandes 101. In Fig. 10 sind beide Führungsgestelle 117 herausgezogen, so daß wahlweise auf einer oder beiden Längsseiten bedient werden kann. Fig. 9 zeigt links den geschlossenen Zustand des Rolladens 116 und rechts den geöffneten Zustand. Bei Nacht sind beide Rolläden 116 geschlossen. Fig. 11 zeigt den Zustand des Verkaufsstandes, wenn nur eine einseitige Bedienung erforderlich ist. Das rechte Führungsgestell bleibt dabei eingefahren. Fig. 12 zeigt den Transportzustand des Verkaufsstandes, in welchem keines der Führungsgestelle herausgezogen ist und alle Rolläden heruntergelassen sind. Die Länge jedes Rolladens ist so bemessen, daß mit ihm der Verkaufsstand auf seiner Längsseite sowohl bei herausgezogenem als auch
bei nicht herausgezogenem Führungsgestell 117 gänzlich verschließbar ist.

0010730

PATENTANWÄLTE
MENGES & PRAHL
Erhardtstrasse 12, D-8000 München 5

Unser Zeichen     S 202-EP

Ratko Spasojevic
Sandbergerstr. 36
7000 Stuttgart 1

P a t e n t a n s p r ü c h e

1.  Fahrbarer Verkaufsstand mit einer Verkaufsöffnung
auf wenigstens einer Längsseite und mit einem Fahrgestellboden, gekennzeichnet durch wenigstens einen Rollladen (16) zum Verschließen wenigstens der Verkaufsöffnung (4)
und durch wenigstens ein innerhalb des Verkaufsstandes (1, Teil 2)
verschiebbar gelagertes und zum Verbreitern des Verkaufsstandes auf seine Betriebsbreite auf einer gesamten Längsseite
desselben herausziehbares Führungsgestell (17) für den Rollladen (16).

2.  Verkaufsstand nach Anspruch 1, dadurch gekennzeichnet,
daß der Rolladen (16) an den inneren Stirnseiten des Verkaufsstandes (Teil 2) in fest angeordneten U-Schienen (15)
geführt ist, in denen im Dachbereich entsprechende U-Schienen (20)
des Führungsgestells (17) teleskopisch verschiebbar sind.

3.  Verkaufsstand nach Anspruch 2, dadurch gekennzeichnet,
daß sich die U-Schienen (20) des Führungsgestells (17) auf

0010730

der von der Verkaufsöffnung (4) abgewandten Längsseite des Verkaufsstandes (Teil 2) vom Dachbereich aus vertikal nach unten erstrecken.

4. Verkaufsstand nach Anspruch 3, dadurch gekennzeichnet, daß an dem Führungsgestell (17) auf der von der Verkaufsöffnung (4) abgewandten Längsseite des Verkaufsstandes eine Rückwand (18) befestigt ist, die nicht bis zur Höhe des Daches reicht, und daß die Länge des Rolladens (16) so bemessen ist, daß er bei nicht herausgezogenem Führungsgestell die Verkaufsöffnung und die Rückseite (6) des Verkaufsstandes (1, Teil 2) verschließt und bei herausgezogenem Führungsgestell die Verkaufsöffnung (4) frei läßt.

5. Verkaufsstand nach einem der Ansprüche 1 bis 4, dadurch gekennzeichnet, daß das Führungsgestell (17) mit einem festen Boden (19) versehen ist, der sich bei nicht herausgezogenem Führungsgestell unterhalb des Fahrgestellbodens (7) des Verkaufsstandes und bei herausgezogenem Führungsgestell in der Verlängerung des Fahrgestellbodens befindet.

6. Verkaufsstand nach Anspruch 5, dadurch gekennzeichnet, daß der Fahrgestellboden (7) und der Boden (19) des Führungsgestells (17) jeweils über Kugelrollen (21) auf dem Erdboden abgestützt sind.

7. Verkaufsstand nach einem der Ansprüche 1 bis 6, dadurch gekennzeichnet, daß auf wenigstens einer Stirnseite des Verkaufsstandes eine um 180° schwenkbare Klapptür (23) angelenkt ist.

8. Verkaufsstand nach einem der Ansprüche 1 bis 7, dadurch gekennzeichnet, daß er (1) durch stirnseitiges Anschließen weiterer gleicher Verkaufsstände (1', 1'') beliebig verlängerbar ausgebildet ist.

9. Verkaufsstand nach einem der Ansprüche 4 bis 8, dadurch gekennzeichnet, daß an der Innenseite der Rückwand (18) eine Klappsitzbank (22) angelenkt ist.

10. Verkaufsstand nach einem der Ansprüche 1 bis 9, gekennzeichnet durch eine hinter der Verkaufsöffnung angeordnete Thekenanlage mit zweckentsprechenden Einbauten (11) für den Verkauf und/oder die Zubereitung von kalten und/oder warmen Speisen und Getränken.

11. Verkaufsstand nach einem der Ansprüche 1 bis 10, gekennzeichnet durch eine sich unterhalb der Verkaufsöffnung (4) über die Längsseite und die beiden Stirnseiten des Verkaufsstandes (1, Teil 2) erstreckende Ablage (10).

12. Verkaufsstand nach Anspruch 11, dadurch gekennzeichnet, daß seine Stirnseiten oberhalb der Ablage verglast (5) sind.

13. Verkaufsstand nach Anspruch 1 oder 2, gekennzeichnet durch wenigstens einen im Dachbereich zwischen den fest angeordneten U-Schienen (115) vorgesehenen und sich über die Breite des Rolladens (116) erstreckenden Rolladenkasten (136) mit einer Achse zum Aufrollen des Rolladens.

14. Verkaufsstand nach Anspruch 13, dadurch gekennzeichnet, daß wenigstens zwei Rolladenkästen (136) in Längsrichtung hintereinander angeordnet sind, so daß zwei Rolladen (116) vor jeder Verkaufsöffnung (104) unabhängig voneinander betätigbar sind.

15. Verkaufsstand nach Anspruch 13 oder 14, dadurch gekennzeichnet, daß an jeder eine Verkaufsöffnung (104) aufweisenden Längsseite unten ein hochklappbares Fußpodest (137) angelenkt ist.

0010730

16. Verkaufsstand nach einem der Ansprüche 13 bis 15, gekennzeichnet durch eine hinter jeder Verkaufsöffnung (104) angeordnete Thekenanlage mit zweckentsprechenden Einbauten (111) für den Verkauf und/oder die Zubereitung von kalten und/oder warmen Speisen und Getränken.

17. Verkaufsstand nach einem der Ansprüche 13 bis 16, dadurch gekennzeichnet, daß im Dach oberhalb jeder Verkaufsöffnung (104) eine hochschwenkbare Klappe (143) eingelassen ist.

18. Verkaufsstand nach einem der Ansprüche 13 bis 17, dadurch gekennzeichnet, daß sein Fahrgestellboden (107) auf einem Campinganhängerfahrgestell (132) angeordnet ist.

19. Verkaufsstand nach einem der Ansprüche 15 bis 18, dadurch gekennzeichnet, daß die U-Schienen (120) des Führungsgestells (117) jeweils bis in die Höhe der Anlenkachse des Fußpodests (137) reichen und dort durch Querträger (135) fest miteinander verbunden sind.

20. Verkaufsstand nach einem der Ansprüche 15 bis 19, dadurch gekennzeichnet, daß das Fußpodest (137) über umklappbare Füße (139) auf dem Erdboden abstützbar ist.

21. Verkaufsstand nach einem der Ansprüche 15 bis 20, dadurch gekennzeichnet, daß das Führungsgestell (117) an den beiden Stirnseiten des Verkaufsstandes verglast (105) ist.

22. Verkaufsstand nach einem der Ansprüche 13 bis 21, dadurch gekennzeichnet, daß die Länge jedes Rolladens (116) so bemessen ist, daß mit ihm der Verkaufsstand (101) auf seiner Längsseite sowohl bei herausgezogenem als auch bei nicht herausgezogenem Führungsgestell (117) gänzlich verschließbar ist.

23. Verkaufsstand nach einem der Ansprüche 13 bis 22, dadurch gekennzeichnet, daß der Verkaufsstand (101) bezüglich seiner vertikalen Längsmittelebene (142) spiegelbildlich gleich ausgebildet ist.

**Fig. 1**

**Fig. 2**

## Fig.3

## Fig.6a  Fig.6b  Fig.6c

0010730

Fig. 4

Fig. 5

# Fig. 7

## Fig. 8

## Fig. 10

## Fig. 9

## Fig. 11

## Fig. 12

Europäisches
Patentamt

EUROPÄISCHER RECHERCHENBERICHT

0010730
Nummer der Anmeldung

EP 79 10 4124

| Kategorie | Kennzeichnung des Dokuments mit Angabe, soweit erforderlich, der maßgeblichen Teile | betrifft Anspruch |
|---|---|---|
| | FR - A - 1 028 612 (VERDON) <br> * Seite 1, rechte Spalte; Zusammenfassung; Figuren 1-3 * | 1,2,10 |
| | FR - A - 3 752 529 (REMKE) <br> * Zusammenfassung * | 1,4,14 |
| | FR - A - 1 465 766 (SCHMITT) <br> * Zusammenfassung * | 1,5 |
| | CH - A - 376 002 (VUARGNOZ) <br> * Seiten 3,4; Figuren 2,7,11,12 * | 8,6 |
| | FR - A - 1 139 741 (GASSE) <br> * Zusammenfassung; Figur 1 * | 13,15, 18,23 |
| | FR - A - 1 093 992 (BORNAREL) <br> * Zusammenfassung * | 14 |
| | FR - A - 1 157 924 (DEFLIREX) <br> * Zusammenfassung; Figur 7 * | 20 |
| A | FR - A - 2 068 120 (SPASOJEVIC) <br> * Ganz * | 1,10,11 |

./.

### KLASSIFIKATION DER ANMELDUNG (Int.Cl. 3)

B 60 P 3/025

### RECHERCHIERTE SACHGEBIETE (Int. Cl. 3)

B 60 P

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 31-01-1980 | SCHMITTER |

EPA form 1503.1 06.78

Europäisches
Patentamt

**EUROPÄISCHER RECHERCHENBERICHT**

0010730

Nummer der Anmeldung

EP 79 10 4124

-2-

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| D | <u>DE - A - 1 095 136</u> (SCHILFF) | 1 |
| | x Ganz x | |
| | ---- | |

KLASSIFIKATION DER ANMELDUNG (Int.Cl. ³)

RECHERCHIERTE SACHGEBIETE (Int. Cl. ³)